# EUROPÄISCHE PATENTANMELDUNG

(11) **EP 0 599 038 A1**
(43) Veröffentlichungstag der Anmeldung: **01.06.1994**
(21) Anmeldenummer: 93116458.6
(22) Anmeldetag: 11.10.1993
(51) Int. Cl.: F16H 39/36, F16D 31/04

(54) **Drehzahlwandler**

(30) Priorität: 27.11.1992 DE 4239992
(71) Anmelder: TRATECH AG, FL-9490 Vaduz (LI)
(72) Erfinder: Mayer, Rudolf, FL-9495 Triesen (LI)
(74) Vertreter: TER MEER - MÜLLER - STEINMEISTER & PARTNER

(57) **Zusammenfassung**

Die Erfindung betrifft einen Drehzahlwandler mit einem drehbaren Wandlergehäuse (1), einem im Wandlergehäuse (1) befindlichen Abtriebszahnrad (3) mit angeschlossener Abtriebswelle (6), wenigstens einem mit dem Abtriebszahnrad (3) kämmenden Antriebszahnrad (4), das vom Wandlergehäuse (1) drehbar gelagert mitgenommen wird, einem das Antriebszahnrad (4) und das Abtriebszahnrad (3) aufnehmenden Strömungskanal (K) für ein Hydraulikmedium, und wenigstens einer im Strömungskanal (K) vorhandenen Drosseleinrichtung (7). Der Strömungskanal (K) ist als geschlossener Kanal ausgebildet, vollständig im Wandlergehäuse (19 angeordnet und erstreckt sich in einer senkrecht zur Abtriebswelle (6) liegenden Ebene.

## Beschreibung

Die Erfindung betrifft einen Drehzahlwandler gemäß dem Oberbegriff des Patentanspruchs 1.

Ein derartiger Drehzahlwandler ist bereits aus der DE 31 04 964 C2 bekannt. Dieser bekannte Drehzahlwandler enthält ein drehbares Wandlergehäuse, ein im Wandlergehäuse befindliches Abtriebszahnrad mit angeschlossener Abtriebswelle, wenigstens ein mit dem Abtriebszahnrad kämmendes Antriebszahnrad, das vom Wandlergehäuse drehbar gelagert mitgenommen wird, einen das Antriebszahnrad und das Abtriebszahnrad aufnehmenden Strömungskanal für ein Hydraulikmedium, und wenigstens eine im Strömungskanal vorhandene Drosseleinrichtung.

Nachteilig bei dem bekannten Drehzahlwandler ist die Tatsache, daß er keinen geschlossenen Strömungskanal für das Hydraulikmedium, in der Regel Öl, aufweist. Er ist daher relativ wartungsintensiv. Der Strömungskanal befindet sich darüber hinaus nicht nur innerhalb des Wandlergehäuses, sondern wird auch über eine mit dem Wandlergehäuse verbundene Kurbelwelle sowie weiter über eine hydraulische Schleifringkupplung nach außen geführt. Dies hat einen relativ komplizierten Verlauf des Strömungskanals zur Folge, was zu einem Verschleiß des Hydraulikmediums und zu oft verstärkter Geräuschentwicklung führt, wenn das Hydraulikmedium an scharfen Kanten innerhalb des Strömungskanals entlangströmt. Infolge der innerhalb der Kurbelwelle vorhandenen Axial- und Radialbohrungen zur Bildung des Strömungskanals kann mit dem bekannten Drehzahlwandler außerdem nur eine geringe Leistung übertragen werden, da der Strömungskanal die Festigkeit der Kurbelwelle herabsetzt.

Der Erfindung liegt die Aufgabe zugrunde, den Drehzahlwandler der eingangs genannten Art so weiter zu bilden, daß er einen wartungsärmeren und kompakteren Aufbau aufweist, weniger geräuschintensiv ist und sich zur Übertragung größerer Leistungen eignet. Der Strömungskanal soll darüber hinaus so gewählt sein, daß sich der Verschleiß des Hydraulikmediums deutlich verringert.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Ein Drehzahlwandler nach der Erfindung zeichnet sich dadurch aus, daß der Strömungskanal,
- als geschlossener Kanal ausgebildet ist,
- vollständig im Wandlergehäuse angeordnet ist, und
- sich in einer senkrecht zur Abtriebswelle liegenden Ebene erstreckt.

Mit anderen Worten liegt der Strömungskanal für das Hydraulikmedium vollständig in der Rotationsebene des Wandlergehäuses und dreht sich mit diesem mit. Wandlergehäuse und Strömungskanal bilden praktisch eine einzige Baueinheit, was zu einem wartungsarmen und kompakten Drehzahlwandler führt. Darüber hinaus braucht das Hydraulikmedium nicht mehr in Axialrichtung des Wandlergehäuses zu strömen, was zu einer verbesserten Zirkulation des Hydraulikmediums und damit zu geringeren Verschleißerscheinungen sowie Geräuschentwicklungen führt.

Auch eine mit dem Wandlergehäuse verbundene Antriebseinrichtung, zum Beispiel eine Kurbelwelle, läßt sich stabiler ausführen, da sie keinen Strömungskanal mehr aufzunehmen braucht, so daß der Drehzahlwandler in der Lage ist, eine höhere Leistung zu übertragen. Selbstverständlich kann der Antrieb des Drehzahlwandlers auch über die Abtriebswelle erfolgen, z. B. dann, wenn der Drehzahlwandler als Motorbremseinrichtung verwendet wird.

Nach einer vorteilhaften Ausgestaltung der Erfindung kämmen mit dem Abtriebszahnrad mehrere Antriebszahnräder, die symmetrisch zur Abtriebswelle liegen. Beispielsweise können zwei, drei oder noch mehr Antriebszahnräder mit dem Abtriebszahnrad kämmen. Dadurch läßt sich die Kraftübertragung zwischen Wandlergehäuse und Abtriebswelle symmetrisch durchführen, was zu einer gleichmäßigeren Belastung des Drehzahlwandlers und damit zu geringerem Verschleiß führt.

Vorzugsweise sind so viele Drosseleinrichtungen wie Antriebszahnräder vorhanden, wobei jeweils eine Drosseleinrichtung z. B. symmetrisch zwischen zwei Antriebszahnrädern liegt. Hierdurch läßt sich eine noch gleichmäßigere Kraftübertragung zwischen Wandlergehäuse und Abtriebswelle verwirklichen.

Nach einer anderen vorteilhaften Ausgestaltung der Erfindung ist jede Drosseleinrichtung so ausgebildet, daß sie das in ihrem Bereich vorhandene Hydraulikmedium nur verschiebt und nicht verdrängt. Auf diese Weise läßt sich das im Strömungskanal vorhandene Volumen an Hydraulikmedium konstant halten, auch wenn die Drosseleinrichtung verschiedene Stellungen, zum Beispiel zum Öffnen oder Schließen des Strömungskanals, einnimmt. Durch Volumenänderungen des Hydraulikmediums verursachte Verschleißerscheinungen oder Geräuschentwicklungen lassen sich daher nahezu vollständig vermeiden.

Nach einer vorteilhaften Weiterbildung der Erfindung sind Abtriebszahnrad und Antriebszahnräder in ihren jeweiligen Zahnfußbereichen in Richtung wenigstens einer Zahnradseite zur Zahnradachse hin geneigt, wobei im Zahneingriffsbereich dieser Zahnräder vorhandene Wandlergehäusewände jeweils mit dem Strömungskanal verbundene Ausnehmungen aufweisen, die im Bereich der Verbindungsgeraden dieser Zahnräder durch eine Steg voneinander getrennt sind.

Sinn dieser Einrichtung ist es, die Menge an gequetschtem Hydraulikmedium im Zahneingriff zu reduzieren. Das Quetschen des Hydraulikmediums kommt immer dann zustande, wenn es unter Druckeinwirkung beim Wegfließen behindert wird. Die Menge an Hydraulikmedium, das aus den Zahnlücken gepreßt wird, entspricht der umgesetzten Menge an Hydraulikmedium, wobei die zum Herausquetschen zur Verfügung stehende Zeit sehr kurz ist. Daher kommt es zu örtlich sehr hohen Fließgeschwindigkeiten (Drosselwirkung) und den damit verbundenen Problemen hinsichtlich des Verschleißes des Hydraulikmediums und der Geräuschentwicklung. Das Problem tritt natürlich auch in umgekehrtem Sinn auf der Saugseite auf.

Durch die genannten Maßnahmen im Zahnfußbereich der Zahnräder läßt sich nun erreichen, daß das Öl aus den Zahnlücken stetiger abfließen und über die Ausnehmung in der Wandlergehäusewand in den Strömungskanal zurückfließen kann. Dabei treten erheblich geringere Fließgeschwindigkeiten auf, was zu einer Reduzierung des Verschleißes an Hydraulikmedium sowie zu einer Verringerung der Geräuschentwicklung führt.

Es ist möglich, das gequetschte Hydraulikmedium nach beiden Seiten der Zahnräder abfließen zu lassen, so daß die Zahnfußbereiche dann ausgehend von der Mitte nach beiden Seiten zur Zahnradachse hin abfallen. In diesem Fall befinden sich an beiden Zahnradseiten die genannten Ausnehmungen in den benachbarten Wandlergehäusewänden. Die Zahnfußbereiche können aber auch nur nach der einen oder nach der anderen Seite fallen.

Nach einer anderen sehr vorteilhaften Weiterbildung der Erfindung sind parallel zu jeder Drosseleinrichtung zwei Steuerkanäle vorhanden, die jeweils einen Differenzdruckkolben aufweisen, wobei die Differenzdruckkolben in entgegengesetzter Richtung wirken und aus einem ersten Kolbenbereich mit großem Durchmesser sowie aus einem zweiten Kolbenbereich mit kleinem Durchmesser bestehen. Zylinderkammern zur Aufnahme der ersten Kolbenbereiche sind an der dem zweiten Kolbenbereich zugewandten Seite über eine Ausgleichsleitung mit Druckeinstelleinrichtung untereinander verbunden.

Durch die genannten Maßnahmen läßt sich eine selbsttätige Regelung verwirklichen, welche Temperatur- und Druckschwankungen kompensieren kann. Diese Regelung garantiert eine ausgeglichene Langzeitfunktion des Drehzahlwandlers und schont die Mechanik sowie das Hydraulikmedium vor Verschleiß durch Überbeanspruchung.

Vorzugsweise besteht jede Drosseleinrichtung aus einem zylindrischen Stellglied mit radialer Durchgangsöffnung, dessen Zylinderachse parallel zur Abtriebswelle liegt. Wird das Stellglied um die Zylinderachse gedreht, so lassen sich je nach Drehstellung über die radiale Durchgangsöffnung Abschnitte des Strömungskanals miteinander verbinden oder unterbrechen. Dabei bleibt in jeder Drehstellung des Stellgliedes das Hydraulikmedium innerhalb der radialen Durchgangsöffnung, so daß keine Volumenänderungen in Abhängigkeit der Drehstellung des Stellgliedes auftreten.

Nach einer sehr vorteilhaften Ausgestaltung der Erfindung ist das Stellglied an einer Stirnseite mit einem quer liegenden Stellhebel verbunden, der das Stellglied beidseitig überragt und an seinem einen Ende über ein Gestänge mit einer Verschiebehülse gekoppelt ist. Die Verschiebehülse umgibt die Abtriebswelle und wird vom Wandlergehäuse über einen Mitnehmer mitgenommen bzw. mitgedreht. Der Mitnehmer gestattet dabei eine axiale Verschiebung der Verschiebehülse relativ zur Abtriebswelle und greift zu diesem Zweck in ein Langloch der Verschiebehülse, wobei sich das Langloch in Axialrichtung der Verschiebehülse erstreckt.

Wird die Verschiebehülse axial verschoben, so wird über das Gestänge der Stellhebel und mit ihm das Stellglied gedreht, so daß es unterschiedliche Schließstellungen einnehmen kann.

Am anderen Ende des Stellhebels kann ein Ausgleichsgewicht angeordnet sein, um eine leichtere Verstellung des Stellgliedes bei hohen Rotationsgeschwindigkeiten des Wandlergehäuses zu ermöglichen. Durch das Ausgleichsgewicht soll im wesentlichen die Fliegkraft des Gestänges kompensiert werden.

Vorzugsweise ist die Verschiebehülse in einem Lagerring mitnehmbar gelagert, welcher in Axialrichtung der Verschiebehülse verschiebbar ist und diese mitnimmt. Die Verschiebung des Lagerrings kann mit Hilfe eines ortsfesten Hebels erfolgen, der seitlich bzw. von außen am Lagerring angreift.

Nach einer anderen vorteilhaften Ausbildung der Erfindung sind der Strömungskanal und die Ausnehmungen zur Aufnahme der Antriebszahnräder und des Abtriebszahnrades in einen einstückigen Wandlergehäusekörper eingebracht. Dies kann beispielsweise dadurch geschehen, daß die entsprechenden Kanäle bzw. Ausnehmungen in den Wandlergehäusekörper hineingefräst werden. Der Wandlergehäusekörper kann mit dem Strömungskanal sowie den Ausnehmungen aber auch als einstückiges Gußteil hergestellt werden. Durch die genannten Maßnahmen wird eine besonders stabile Baueinheit erzielt.

Darüber hinaus kann der Strömungskanal zur Vergrößerung seiner Oberfläche gewunden sein, beispielsweise mäanderförmig, oder mehrfach gebogen ausgebildet sein, um eine größere Wärmeableit- bzw. Kühlfläche zu erhalten. Bereichsweise läßt sich der Strömungskanal darüber hinaus auch in parallele Kanäle aufteilen, die vor den Zahnrädern bzw. Drosseleinrichtungen wieder zusammengeführt werden, so daß auch hierdurch eine größere Wärmeableitoberfläche gebildet wird.

Die Erfindung wird nachfolgend unter Bezugnahme auf die Zeichnung näher beschrieben. Es zeigen:
- **Fig. 1**: eine Draufsicht auf ein Wandlergehäuse mit geschlossenem Strömungskanal,
- **Fig. 2**: eine Skizze zur Erläuterung des Aufbaus einer Drosseleinrichtung,
- **Fig. 3**: eine Darstellung zur Erläuterung der Quetschölbildung,
- **Fig. 4**: einen Schnitt entlang der Linie A-A in Fig. 3,
- **Fig. 5**: einen Schnitt entlang der Linie B-B in Fig. 3,
- **Fig. 6**: eine Draufsicht auf das Wandlergehäuse in detaillierterer Darstellung,
- **Fig. 7**: einen Schnitt entlang der Linie C-C in Fig. 6,
- **Fig. 8**: einen Schnitt entlang der Linie B-B in Fig. 6,
- **Fig. 9**: eine Ansicht in Richtung X, eingezeichnet in Fig. 6,
- **Fig. 10**: einen Schnitt entlang der Linie A-A in Fig. 6,
- **Fig. 11**: ein mit dem Strömungskanal verbundenes Regelsystemim Zustand: Förderkreis offen, Anlage kalt,
- **Fig. 12**: das Regelsystem im Zustand: Förderkreis offen, Anlage warm,
- **Fig. 13**: das Regelsystem im Zustand: Förderkreis zu, Anlage warm,
- **Fig. 14**: eine Befüllungsanlage für den Drehzahlwandler,
- **Fig. 15**: ein Getriebediagramm des Drehzahlwandlers,
- **Fig. 16**: ein Einbauschema für den Einbau des Drehzahlwandlers in einem Kraftfahrzeug mit angetriebener Hinterachse und
- **Fig. 17**: ein Einbauschema für den Einbau des Drehzahlwandlers in ein Kraftfahrzeug mit Einzelrad-Antriebssystem.

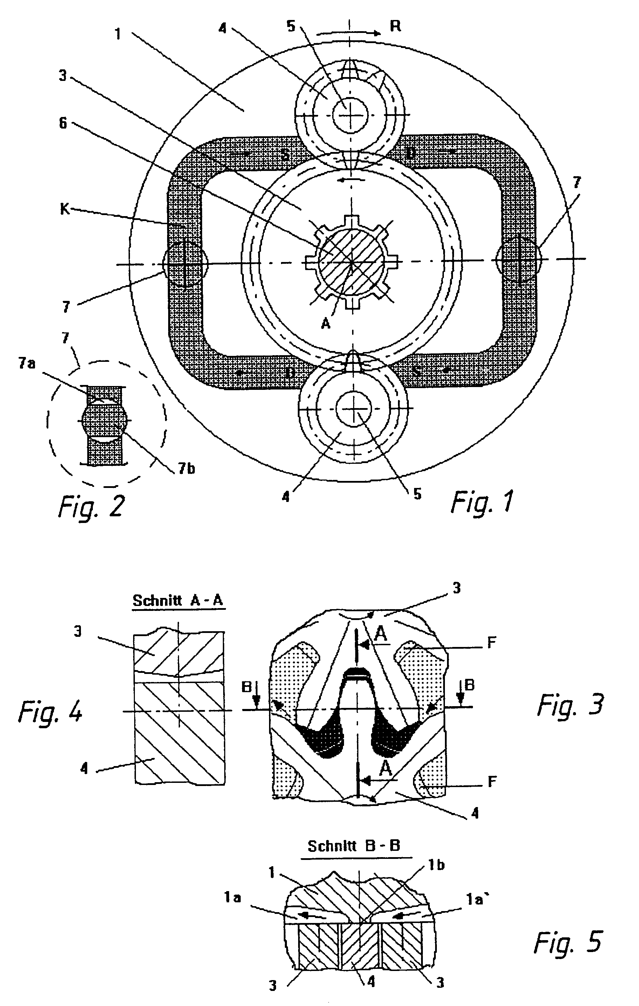

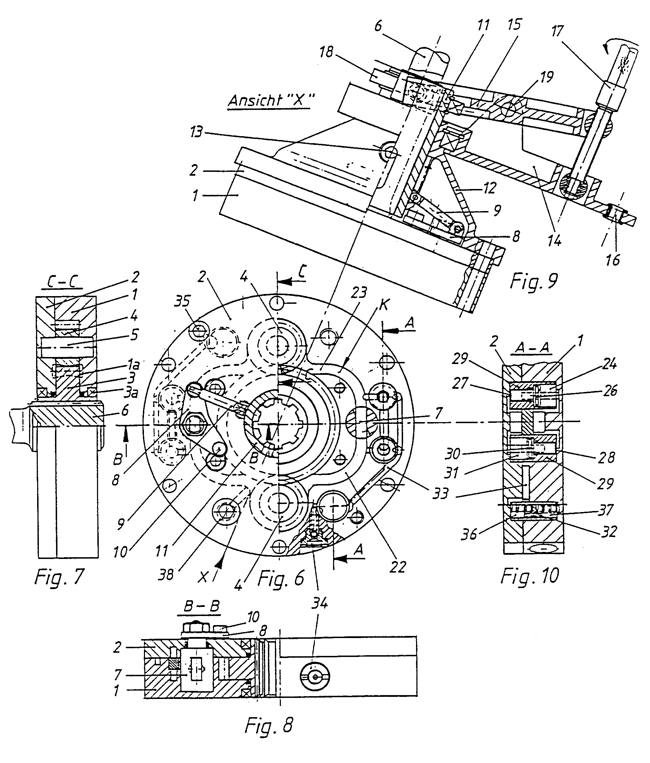

Anhand der Fig. 1 wird nachfolgend die prinzipielle Wirkungsweise des Drehzahlwandlers nach der Erfindung näher beschrieben. Dabei zeigt die Fig. 1 eine Draufsicht auf das Wandlergehäuse des Drehzahlwandlers bei abgenommener Verkleidung (Bezugszeichen 2 in Fig. 8).

Das Wandlergehäuse ist mit dem Bezugszeichen 1 versehen und im wesentlichen kreisplattenförmig ausgebildet. Es ist um eine zentrale Gerade A drehbar, die sich senkrecht zur Plattenebene erstreckt. Die Rotationsrichtung sei mit dem Bezugszeichen R angegeben.

Das Wandlergehäuse 1 kann zum Beispiel am Schwungrad einer Kurbelwelle (nicht dargestellt) angeflanscht und gleichzeitig Teil einer Schwungmasse sein. Innerhalb des Wandlergehäuses 1 befindet sich koaxial zur Geraden A ein Abtriebszahnrad 3, das ständig in Eingriff mit zwei Antriebszahnrädern 4 steht, die auf einer durch die Gerade A gehenden geraden Linie an gegenüberliegenden Seiten des Abtriebszahnrades 3 angeordnet sind. Die Antriebszahnräder 4 sind um Achsen 5 drehbar, die am Wandlergehäuse 1 gehalten sind. Dreht sich das Wandlergehäuse 1 in Richtung des Pfeils R in Fig. 1, so werden die Achsen 5 entsprechend mitgenommen. Mit dem Abtriebszahnrad 3 ist eine Abtriebswelle 6 fest verbunden. Lagereinrichtungen für das Abtriebszahnrad 3 und die Abtriebswelle 6 sind nicht im einzelnen dargestellt.

Innerhalb des Wandlergehäuses 1 befindet sich ferner ein geschlossener Strömungskanal K, der sich parallel zur Ebene des Wandlergehäuses 1 erstreckt. Dieser Strömungskanal K ist im wesentlichen kreis- oder rechteckförmig ausgebildet und umgibt das Abtriebszahnrad 3. An jeweils gegenüberliegenden Seiten liegen die kämmenden Bereiche von Abtriebszahnrad 3 und Antriebszahnrad 4 innerhalb des Strömungskanals K, um als Fördereinrichtung für das Hydrauliköl (Hydraulikmedium) zu dienen, das sich innerhalb des Strömungskanals K befindet. Dabei sind alle Zahnräder 3 und 4 als Ölpumpenräder mit spezieller Zahnfußbearbeitung ausgeführt. Die Zahnlücken und der Strömungskanal K sind vollständig mit Öl gefüllt und luftdicht verschlossen.

Im Betrieb wird das Wandlergehäuse 1 in Richtung des Pfeils R ständig mit Motordrehzahl mitgedreht. Der sich im Umlauf befindliche Hydraulikölstrom ist dabei abhängig vom Drehzahlunterschied zwischen dem Wandlergehäuse 1 und dem Abtriebszahnrad 3. Dieser Drehzahlunterschied, auch Schlupf genannt, kann mit Hilfe von Drosseleinrichtungen 7 genau reguliert werden, die sich innerhalb des Strömungskanals K im Bereich zwischen jeweils zwei Antriebszahnrädern 4 befinden. Auf diese Weise ist es möglich, zu jeder Abtriebsdrehzahl die gewünschte Motordrehzahl beizuregeln. Der Motor läßt sich somit zum Beispiel während einer Fahrzeugbeschleunigung bei gleicher Drehzahl halten, so daß trotz eines Schlupfs die volle Motorleistung ohne Verlust auf den Antriebsstrang übertragen werden kann. Sind die Drosseleinrichtungen 7 vollständig geschlossen, so wird die höchstmögliche Drehzahl für den Antriebsstrang (Abtriebswelle 6) erreicht.

Die Fig. 1 läßt erkennen, daß bei Drehung des Wandlergehäuses 1 in Richtung des Pfeils R das Hydrauliköl im Uhrzeigersinn zirkuliert und von einer Ansaugseite S zu einer Druckseite D transportiert wird, wenn die Drosseleinrichtungen 7 geöffnet sind. Dabei umströmt das Hydrauliköl die Antriebszahnräder 4. Sind dagegen die Drosseleinrichtungen 7 vollständig geschlossen, so wird eine im wesentliche starre Kupplung zwischen den Antriebszahnrädern 4 und dem Abtriebszahnrad 3 erhalten.

Die Fig. 2 zeigt den Aufbau der Drosseleinrichtungen 7. Sie bestehen im wesentlichen aus einem zylindrischen Stellglied 7a, das eine radiale Durchgangsöffnung 7b aufweist. Die Zylinderachse des Stellgliedes 7a verläuft dabei parallel zur Abtriebswelle 6. Die Durchgangsöffnung 7b ist ständig mit Hydrauliköl gefüllt, so daß bei Verdrehung des Stellgliedes 7a keine Volumenänderung an Hydrauliköl innerhalb des Strömungskanals K entsteht.

Die Fig. 3 bis 5 zeigen Maßnahmen zur Beseitigung von Quetschölbildung. Wie bereits erwähnt, wird das Öl immer dann gequetscht, wenn es unter Druckwirkung beim Wegfließen behindert wird. Dies ist der Fall, wenn das Öl aus den Zahnlücken gepreßt wird. Dabei kann es zu örtlich sehr hohen Fließgeschwindigkeiten und damit zu Verschleißerscheinungen des Öls und zu Geräuschentwicklungen kommen. Das ist unerwünscht. Ein entsprechender Effekt tritt auch auf der Saugseite ein, wenn Öl in einen evakuierten Zahnlückenraum einfällt.

Zur Vermeidung einer Quetschölbildung zwischen den Antriebszahnrädern 4 und dem Abtriebszahnrad 3 sind erfindungsgemäß die Zahnfußbereiche dieser Zahnräder in Richtung wenigstens einer Zahnradseite zur Zahnradachse hin geneigt. Dies ist zum Beispiel in Fig. 4 zu erkennen, die einen Schnitt entlang der Linie A-A in Fig. 3 darstellt. Die Zahnfußbereiche F des Abtriebszahnrades 3 sind hier ausgehend von der Mitte nach beiden Seiten zur Zahnradachse hin geneigt, so daß mit anderen Worten die Zahnfußbereiche F in der Mitte einen größeren Durchmesser als an den Zahnradseiten aufweisen. Entsprechendes gilt für die Zahnfußbereiche der Antriebszahnräder 4. Das in den Zahnlücken vorhandene Öl läßt sich durch diese Maßnahme mit relativ kleiner und gleichmäßiger Geschwindigkeit seitlich aus den Zahnlücken herauspressen, wobei der Druck im wesentlichen konstant bleibt. Das herausgepreßte Öl wird durch Ausnehmungen 1a, 1a' in den Seitenwänden des Wandlergehäuses 1 abgeführt (1a) bzw. auf der Ansaugseite zugeführt (1a'). Dies läßt die Fig. 5 erkennen, die einen Schnitt entlang der Linie B-B in Fig. 3 darstellt. Im Falle der Fig. 4 sind die Ausnehmungen 1a, 1a' an gegenüberliegenden Seitenwänden des Wandlergehäuses 1 vorhanden, wobei die Ausnehmungen 1a in Verbindung mit der Druckseite des Strömungskanals K und die Ausnehmungen 1a' mit der Saugseite des Strömungskanals K stehen und nur im Bereich des Zahneingriffs der in Rede stehenden Zahnräder vorhanden zu sein brauchen. Die Ausnehmung 1a links in Fig. 5 wäre in diesem Fall mit der linken unteren Druckseite D des Strömungskanals in Fig. 1 verbunden, während die Ausnehmung 1a' rechts in Fig. 5 mit der rechten unteren Saugseite S des Strömungskanals in Fig. 1 verbunden wäre. Beide Ausnehmungen 1a, 1a' sind durch einen Steg 1b voneinander getrennt.

Die Vorteile, die durch diese Maßnahmen erzielt werden, liegen in der Verbesserung des Wirkungsgrades (Antriebsleistung/Förderleistung), in der geringeren Geräuschentwicklung, in der geringeren Ölerwärmung, in der höheren Förderleistung, in der geringeren Lagerbelastung sowie in der gleichmäßigeren Antriebsleistung.

Die Fig. 6 bis 10 zeigen den detaillierteren Aufbau des Drehzahlwandlers nach der Erfindung, wobei gleiche Elemente, wie in Fig. 1 mit den gleichen Bezugszeichen versehen sind.

Entsprechend den Fig. 6 und 7 besteht der Drehzahlwandler nach der Erfindung aus einem einstückigen Wandlergehäuse 1 und einer deckelförmigen Verkleidung 2. Beide Teile bilden zusammen ein im wesentlichen kreisplattenförmiges Bauelement. Senkrecht zur Plattenebene verläuft die Abtriebswelle 6, die an ihrem einen Ende das Abtriebszahnrad 3 fest trägt. Das Abtriebszahnrad 3 befindet sich in einer Ausnehmung des Wandlergehäuses 1 und liegt somit zwischen dessen Bodenbereich und der Verkleidung 2. Es ist über eine Lagereinrichtung 3a am Bodenbereich bzw. an der Verkleidung 2 gelagert. Ebenfalls zwischen der Verkleidung 2 und dem Bodenbereich des Wandlergehäuses 1 befinden sich in entsprechenden Ausnehmungen die Antriebszahnräder 4, die auf den Antriebswellen 5 frei drehbar sind. Die Antriebswellen 5 sind in entsprechenden Öffnungen innerhalb der Verkleidung 2 und des Bodenbereichs des Wandlergehäuses 1 gehalten. Darüber hinaus sind in Fig. 7 die Ausnehmungen 1a zu erkennen, über die Öl aus den Zahnlückenbereichen abgeführt bzw. diesen zugeführt wird. Diese Ausnehmungen 1a befinden sich also an den Innenseiten des Bodens des Wandlergehäuses 1 bzw. der Verkleidung 2 und liegen im wesentlichen in demjenigen Bereich, in welchem die Zahnräder 3, 4 kämmen.

Der Strömungskanal K ist ebenfalls durch entsprechende Ausnehmungen im Wandlergehäuse 1 gebildet. Er steht mit demjenigen Raum in Verbindung, der zur Aufnahme des Abtriebszahnrades 3 und der Antriebszahnräder 4 dient. Die Drosseleinrichtungen 7 sind als zylindrische Stellglieder ausgebildet, die in zylindrischen Ausnehmungen des Wandlergehäuses 1 untergebracht sind. Der Strömungskanal K, die Aufnahmeräume für die Zahnräder sowie die Ausnehmungen für die Stellglieder können durch entsprechende Einfräsungen im Wandlergehäuse 1 gebildet sein.

Jede Drosseleinrichtung 7 ist an ihrem freien Ende mit einem Stellhebel 8 verbunden, der leicht winkelförmig ausgebildet ist und das Stellglied nach beiden Seiten überragt. Ein Ende dieses Stellhebels 8 ist über ein Gestänge 9 mit einer Verschiebehülse 11 gelenkig verbunden, die koaxial die Abtriebswelle 6 umgibt. Am anderen freien Ende des Stellhebels 8 befindet sich ein Ausgleichsgewicht 10. Wird die Verschiebehülse 11 in Axialrichtung relativ zur Abtriebswelle 6 verschoben, so wird über das Gestänge 9 und den Stellhebel 8 eine Drehkraft auf die Drosseleinrichtung 7 übertragen, um sie auf diese Weise zu verstellen. Dadurch läßt sich der Strömungskanal K öffnen bzw. verschließen. Die Verschiebehülse 11 ist in einem Gehäuse 12 mit Schiebesitz gelagert und wird durch eine Führungsschraube 13, die am Gehäuse befestigt ist, gegen Verdrehung gesichert, die in ein entsprechendes Langloch innerhalb der Verschiebehülse 11 eingreift. Das Gehäuse 12 ist dabei fest mit dem Wandlergehäuse 1 verbunden. Das Langloch erstreckt sich in Axialrichtung der Verschiebehülse 11. Ein Widerlager 14 für einen Ausrückhebel 15 ist an einer Führungsbuchse 16 gegen Verdrehung gesichert. Mittels einer Drehspindel 17 läßt sich der Ausrückhebel 15 verschwenken, um dadurch die Verschiebehülse 11 axial verstellen zu können. Das freie Ende des Ausrückhebels 15 ist zu diesem Zweck mit einem Lagerring 18 schwenkbarverbunden, in welchem die Verschiebehülse 11 gelagert ist. Wird der Ausrückhebel 15 mit Hilfe der Drehspindel 17 um ein Gelenk 19 am Widerlager 14 verschwenkt, so läßt sich der Lagerring 18 und mit ihm die Verschiebehülse 11 axial bewegen. Dies ist am besten in Fig. 9 zu erkennen.

Anhand der Fig. 10 bis 13 wird nachfolgend eine selbsttätige Regeleinrichtung für den erfindungsgemäßen Drehzahlwandler beschrieben, welche Temperatur- und Druckschwankungen durch dreifachwirkende Differenzdruckkolben ausgleichen kann. Diese Regelung garantiert eine ausgeglichene Langzeitfunktion des Drehzahlwandlers und schont die Mechanik und die Hydraulikflüssigkeit vor Verschleiß durch Überbeanspruchung.

Dabei zeigt die Fig. 10 eine Schnitt entlang der Linie A-A in Fig. 6.

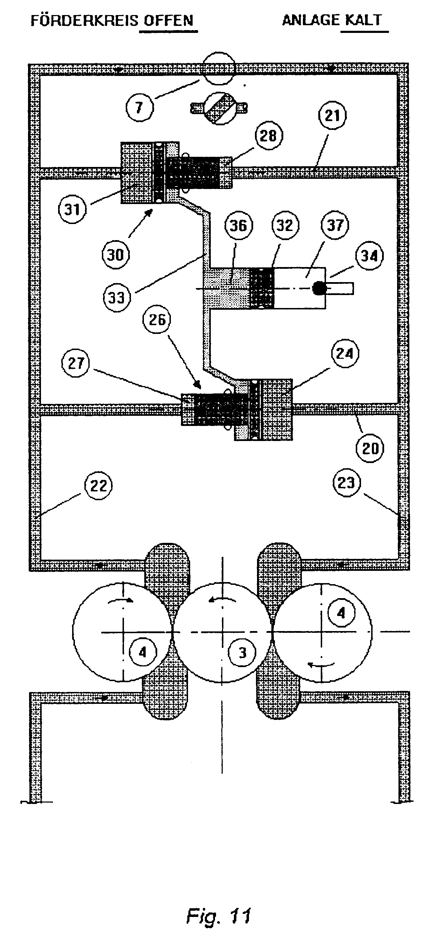

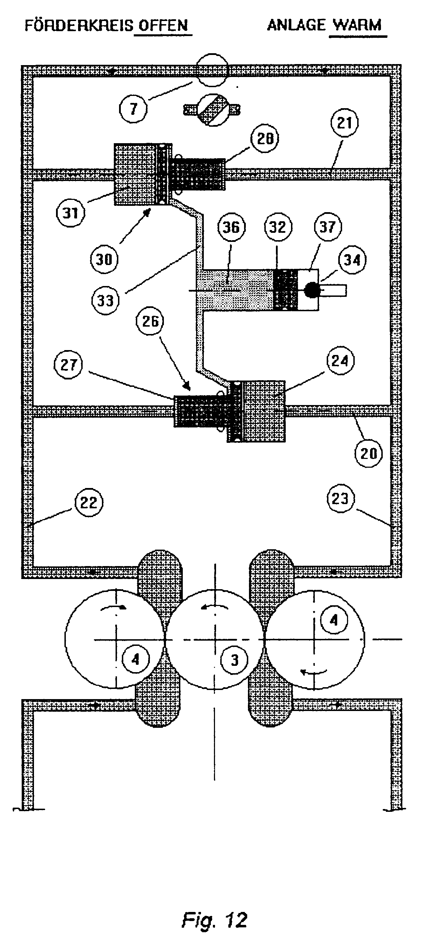

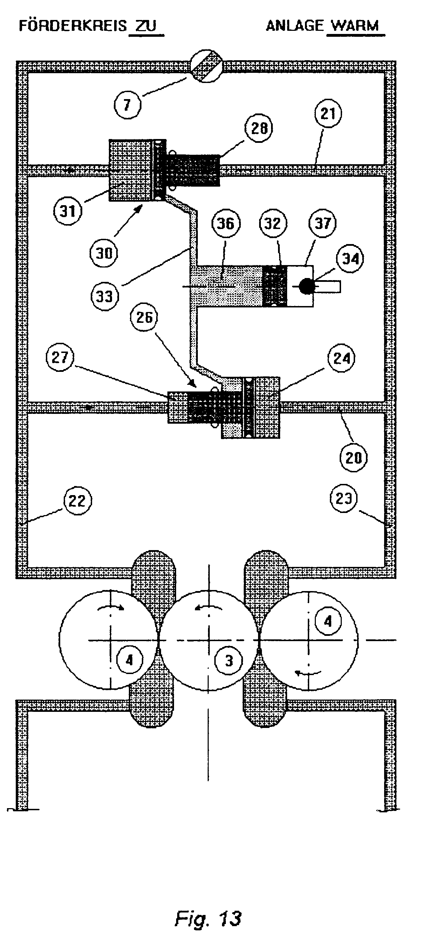

Ferner zeigt die Fig. 11 einen Zustand, bei dem der Förderkreis (Strömungskanal) offen und die Anlage kalt ist. Dagegen ist in Fig. 12 ein Zustand dargestellt, bei dem der Förderkreis offen und die Anlage warm ist. Ferner zeigt die Fig. 13 einen Zustand bei geschlossenem Förderkreis und warmer Anlage.

Wie bereits die Fig. 1 erkennen läßt, wird jeweils eine Halbschleife des Strömungskanals K durch die Drosseleinrichtung 7 in zwei Teilbereiche unterteilt, die in den Fig. 11 bis 13 mit den Bezugszeichen 22 und 23 versehen sind. Die folgende Erläuterung bezieht sich nur auf eine solcher Halbschleifen und gilt entsprechend für die andere Halbschleife.

Gemäß den Fig. 11 bis 13 liegen parallel zu jeder Drosseleinrichtung 7 zwei Steuerkanäle 20 und 21, in denen jeweils ein Differenzdruckkolben 26 bzw. 30 vorhanden ist, die entgegengesetzt angeordnet sind bzw. arbeiten. Jeder Differenzdruckkolben 26 bzw. 30 besteht aus einem ersten Kolbenbereich mit großem Durchmesser sowie aus einem zweiten Kolbenbereich mit kleinem Durchmesser. Der erste Kolbenbereich mit großem Durchmesser befindet sich in einer großen Zylinderkammer 24 bzw. 31, während sich der zweite Kolbenbereich mit kleinem Durchmesser in einer kleinen Zylinderkammer 27 bzw. 28 befindet. Die jeweils großen Zylinderkammern 24 und 31 sind über eine Ausgleichsleitung 33 miteinander verbunden, die von derjenigen Seite der Zylinderkammern 24 und 31 abgeht, die jeweils den entsprechend kleinen Zylinderkammern 27 bzw. 28 zugewandt ist. Mit der Ausgleichsleitung 33 ist eine Druckeinstelleinrichtung verbunden, die aus einem in einem Zylinder geführten Trennkolben 33 besteht. Der unmittelbar mit der Ausgleichsleitung verbundene Zylinderbereich 36 links vom Trennkolben 32 in Fig. 11 ist mit Öl gefüllt, während im Zylinderbereich 37 rechts vom Trennkolben 32 in Fig. 11 ein Basissystemdruck herrscht, der beispielsweise durch eine Gasbefüllung erzeugt wird. Hierzu ist eine geeignete Öffnung 34 vorhanden.

Ist der Förderkreis offen, sind also die Teilbereiche 22 und 23 über die Drosseleinrichtung 7 miteinander verbunden, und befindet sich die Anlage in kaltem Zustand (Fig. 11), so nimmt das Öl im Förderkreis aufgrund seiner höheren Dichte im kalten Zustand ein kleineres Volumen in Anspruch. Dadurch werden die Differenzdruckkolben 26 und 30 in Richtung der jeweils großen Zylinder 24 und 31 verschoben, und zwar in Folge des im Zylinderbereich 37 wirkenden Basisdrucks, der über den Trennkolben 32 und das im Zylinderbereich 37 bzw. in der Ausgleichsleitung 33 befindliche Öl auf die Unterseite der Kolbenbereiche mit größerem Durchmesser übertragen wird. Diese Stellung betrifft den Ruhezustand und den Betriebszustand mit offenem Förderkreis, d.h., es wird kein Moment übertragen.

Gemäß Fig. 12 bleibt der Förderkreis zunächst offen,jedoch läuft die Anlage warm. Im warmen Zustand nimmt das Ölvolumen zu, wodurch die Differenzdruckkolben in Richtung der kleinen Zylinder 27 bzw. 28 gedrückt werden. Gleichzeitig wird dabei das Öl aus der Ausgleichsleitung 33 in den Zylinderbereich 36 gedrückt, so daß infolge der Wirkung des Trennkolbens 33 der Basisdruck im Zylinderbereich 37 erhöht wird. Diese Funktion ist erforderlich, da sonst der Arbeitsdruck im Förderkreis unzulässig hohe Werte annehmen würde. Diese hohen Druckwerte könnten zum Beispiel Gleitringdichtungen beschädigen, die im Drehzahlwandler Verwendung finden.

Nachfolgend wird auf Fig. 13 Bezug genommen. Soll der Drehzahlwandler ein Moment übertragen, so wird die Drosseleinrichtung 7 in Richtung Schließen verstellt, wodurch die Teilbereiche 22 und 23 des Strömungskanals voneinander getrennt werden. Das hat einen Druckanstieg im Teilbereich 22 des Strömungskanals zur Folge. Dagegen nimmt der Druck im Teilbereich 23 des Strömungskanals ab. Der rasche Druckanstieg im Teilbereich 22 kann neben Geräuschen auch ein Volumendefizit auf der Saugseite erzeugen, also im Teilbereich 23. Um das zu verhindern, tritt die Differenzdruckregelung in Kraft.

Steigt der Druck im Teilbereich 22 an, so werden alle Differenzdruckkolben 26 und 30 zur Saugseite geschoben, also in Richtung des Teilbereichs 23. Dabei wird die Bewegung der Differenzdruckkolben 26, 30 dadurch gedämpft, das gleichzeitig das Ausgleichsöl aus der großen Zylinderkammer 31 über die Ausgleichsleitung 33 zur großen Zylinderkammer 24 strömen muß. Tritt zusätzlich im Teilbereich 23 des Strömungskanals ein Volumendefizit ein, so kann der Differenzdruckkolben 26 dies ausgleichen wohingegen der Differenzdruckkolben 30 auf Anschlag festgehalten wird. Wird die Antriebskraft umgekehrt, bremst also der Motor das Fahrzeug, so tauschen die Differenzdruckkolben 26 und 30 ihre Rolle.

In Fig. 10 sind gleiche Elemente wie in den Figuren 11 bis 13 mit den gleichen Bezugszeichen versehen und werden nicht nochmals beschrieben. Allerdings läßt die Fig. 10 erkennen, daß die großen und kleinen Zylinder 24 bzw. 27 und 31 bzw. 28 innerhalb von Einsätzen gebildet sind, die das Bezugszeichen 29 tragen und in entsprechende Ausnehmungen des Wandlergehäuses 1 bzw. des Deckels 2 eingesetzt sind. Diese Einsätze 29 weisen Durchgangsöffnungen zu den entsprechenden Zylinderkammern auf, um die Zylinderkammern mit den Kanälen 20, 21 und 33 verbinden zu können.

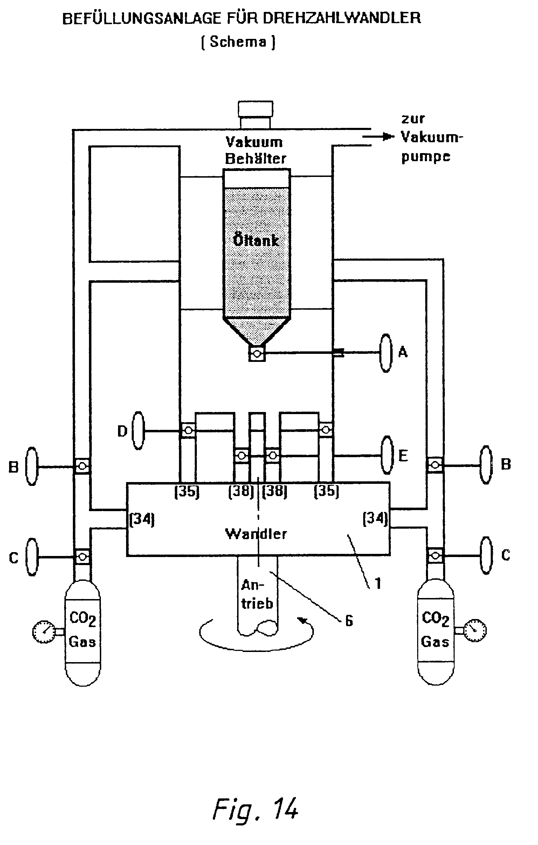

Unter Bezugnahme auf die Fig. 14 wird nachfolgend beschrieben, wie der Drehzahlwandler nach der Erfindung befüllt wird. Vor dem Befüllen werden alle Hohlräume im Drehzahlwandler im Hochvakuum luftleer gepumpt. Dies geschieht unter Verwendung eines aufgesetzten Vakuumbehälters, in dem sich auch ein Tank mit Hydrauliköl befindet. Dies hat den Vorteil, daß beim Einströmen des Öls in den Drehzahlwandler keine Luftblasen gebildet werden können.

Bei der Befüllung des Drehzahlwandlers werden alle beweglichen Bauteile in die in Fig. 11 gezeigte Position gebracht. Diese Position wird sich auch durch das Vakuum nicht ändern, da keine Druck- bzw. Flächendifferenz besteht.

Zur Bildung des Vakuums innerhalb des Drehzahlwandlers werden sodann die Schieber B, D und E geöffnet, während die Schieber A und C geschlossen bleiben. Dabei sind die über die Schieber B, D und E geöffneten Kanäle mit folgenden Kanälen bzw. Öffnungen im Drehzahlwandler 1 verbunden:
1) Kanal Schieber B mit Öffnung 34;
2) Kanal Schieber D mit Öffnung 35, verbunden mit Kanal 33;
3) Kanal Schieber E mit Öffnung 38, verbunden mit Kanal 22, 23.

In Fig. 14 sind jeweils zwei dieser Öffnungen 34, 35, 38 dargestellt, da zwei Regelsysteme pro Drehzahlwandler vorhanden sind.

Ist das gewünschte Vakuum erreicht, wird der Schieber A geöffnet, und die Hohlräume innerhalb des Drehzahlwandlers werden durch Schwerkraft mit Öl geflutet. Gleichzeitig wird über einen Antrieb der Rotor (Abtriebszahnrad) im Drehzahlwandler langsam gedreht, so daß das Öl in den gesamten Strömungskreislauf gefördert wird.

Ist der Drehzahlwandler mit Öl gefüllt, werden die Schieber A, B, D und E sowie die Nachfüllöffnungen 35, 38 geschlossen. Anschließend wird der Schieber C geöffnet, wodurch der Zylinderbereich 37 über die Öffnung 34 in Fig. 11 mit Gas gefüllt wird. Die Anlage wird dadurch unter Druck gesetzt. Dabei läßt sich gleichzeitig die Anlage auf Dichtigkeit und Funktion prüfen. Schließlich wird die Befüllungsanlage abgekoppelt. Der Wandler kann jetzt eingebaut werden.

Er läßt sich zum Beispiel in folgende Produkte einsetzen: Lastkraftwagen, Nutzfahrzeuge, Busse, Schienenfahrzeuge, Baumaschinen, Motor- und Rollenprüfstände, Motor- und Fahrräder, Boote und Schiffe, Seilbahnen und Liftanlagen, Nebenaggregate, Kompressoren, Turbinen, Verdichter, Abgasturbo- und Druckwellenlader, Antriebe für Werkzeugmaschinen, drehzahlgeregelte Schwingungsdämpfer usw.

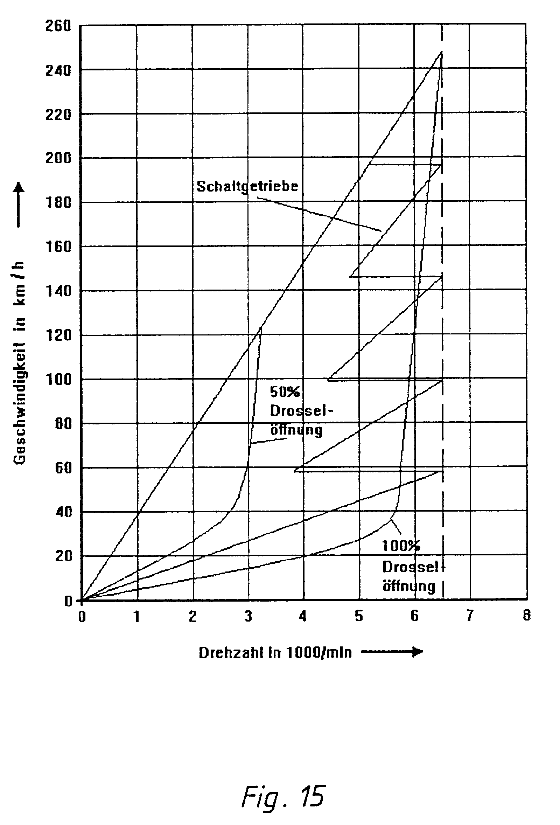

Die Fig. 15 zeigt eine mögliche Kennlinie des Drehzahlwandlers nach der Erfindung im Getriebediagramm (Geschwindigkeit aufgetragen über die Drehzahl). Dabei sind zwei Kennlinien für 50% Drosselöffnung und 100% Drosselöffnung im Vergleich zu einem normalen Schaltgetriebe als Kennlinie dargestellt. Die als Parameter verwendete Drosselstellung für den Motor ist hier umgerechnet auf die Drosselstellung für den Drehzahlwandler. Jede gewünschte Kennlinie kann durch Programmierung der Stellung der Drosseleinrichtung 7 eingestellt werden, wobei sich die Stellung der Drosseleinrichtung beim Durchfahren der Kennlinie stetig ändert.

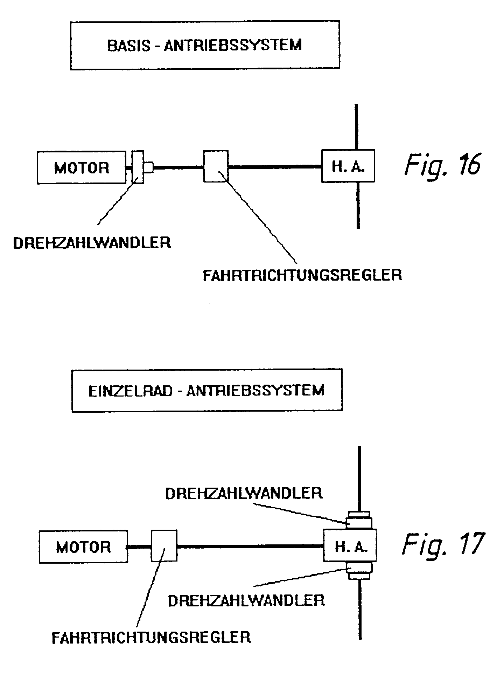

Die Fig. 16 und 17 zeigen zwei verschiedene Einbaumöglichkeiten für den erfindungsgemäßen Drehzahlwandler.

Die Fig. 16 betrifft den Einbau in einen Personenwagen mit angetriebener Hinterachse. Beim Standardsystem wird der Drehzahlwandler an Stelle der Kupplung am Schwungrad montiert. Das weitere Getriebegehäuse beinhaltet nur noch einen Rückwärtsgang, eine Leerlaufstellung, einen Vorwärtsgang für die direkte Verbindung des Motors zum Antriebsstrang, eine kurze Übersetzung für Passfahrten bzw. zur Unterstützung der Motorbremswirkung und beim Allrad ein Verteilergetriebe. Die Anpassung der optimalen Übersetzung wird automatisch von einem elektronischen Steuergerät durchgeführt. Für die Funktion werden folgende Parameter zur Verfügung gestellt:
Programmvorgabe der gewünschten Vollastkennlinie (welche Motordrehzahl soll bei welcher Beschleunigung für welche Geschwindigkeit gehalten werden), Motor-Ist-Drehzahl, Raddrehzahl der Antriebsachse, Drosselstellung, Fahrtrichtung, und dgl. Da die meisten Information bereits von der Motorsteuerung abgefragt werden, könnte auch diese die Anpassung der Übersetzung vornehmen.

Der Fahrer kann per Knopfdruck die Fahrtrichtung "vor- oder rückwärts" wählen. Wie bei einem herkömmlichen Fahrzeug mit Automatikgetriebe wird er auch hier mit dem rechten Fuß auf die Bremse treten, um den gewünschten Anfahrtdruck zu unterbinden. Zum Anfahren muß er dann das Fahrpedal betätigen. Je nach Pedalstellung wird die angestrebte Endgeschwindigkeit bestimmt. Würde der Fahrer "Vollgas" geben, so würde der Motor mit der vorprogrammierten Drehzahlkennlinie das Fahrzeug so lange beschleunigen, bis die Endgeschwindigkeit erreicht ist. Die maximale Beschleunigung wird vom Fahrzeughersteller durch den Verlauf der vorprogrammierten Drehzahlkennlinie bestimmt. Darunter kann der Fahrer durch langsames Betätigen des Gaspedals die Beschleunigung selber wählen. Diese Beziehung gilt auch, wenn bereits eine Anfangsgeschwindigkeit besteht. Bei längeren Passfahrten schaltet das Getriebe automatisch in die kleine Fahrstufe zurück, falls der Fahrer dies per Knopfdruck angekündigt und die Geschwindigkeit einen der Fahrstufe entsprechenden maximalen Wert unterschritten hat.

Gemäß Fig. 17 können Drehzahlwandler nach der Erfindung aber auch bei Einzelrad-Antriebssystemen zum Einsatz kommen. Bei einem Rennwagen kann zum Beispiel pro Antriebsrad ein Drehzahlwandler verwendet werden. Dadurch ist es möglich, auch in Kurven die Radleistung und- Drehzahl in gewünschter Weise anzupassen. Diese Anordnung ersetzt also gleichzeitig das Schaltgetriebe, den Achsausgleich und die Achssperre.

Das Grundprinzip ist das gleiche wie beim Basis-Antriebssystem, jedoch ist aufgrund der hohen Motorleistung eine kontrollierte Radschlupfregelung über eine elektronisch betätigte Drosselklappe erforderlich. Außerdem hat der Fahrer noch Zusatzoptionen zur Verfügung, um auf das Antriebssystem Einfluß ausüben zu können. Als manuelle Option kann er an einem Funktionsschalter während der Fahrt verschiedene Drehzahlkennlinien einstellen. Hierdurch ist eine passive Kennlinienvorwahl gegeben. Der Fahrer kann damit prüfen, mit welcher Einstellung die höchste Geschwindigkeit, der geringste Kraftstoffverbrauch oder zum Beispiel im Regen der geringste Schlupf möglich ist. Die oben genannte Methode wendet man meist nur dann an, wenn eine neue Rennstrecke zum ersten Mal befahren wird.

In der Regel bedient sich der Fahrer der aktiven Kennlinienvorwahl. Hierbei handelt es sich um ein Zusatzprogramm, welches streckenspezifisch, d.h. je nach Streckenabschnitt automatisch die optimale Kennlinie aufruft. Die Basiszuordnung wird vom Fahrer und seinem Techniker erfahrungsgemäß von vorhergegangenen Testfahrten abgeleitet. Gestartet wird dieses Programm vom Fahrer durch zweimaliges Drücken einer speziellen Reset-Taste entweder beim Start oder beim Überfahren der Start/Ziel-Linie. Der Programmstart wird mit einer Kontrollampe bestätigt. Ab Jetzt wird bei jedem Bremspunkt auf die nächste Kennlinie weitergeschaltet. Da die Anzahl der Bremspunkte pro Runde immer gleich ist, erkennt das Programm, wann eine neue Runde beginnt. Wird der Fahrer einmal gezwungen, einen nichtplanmäßigen Bremsvorgang einzulegen, so muß er diesen durch einmaliges Drücken der Reset-Taste stornieren. Diese Kennlinienvorwahl wird aktiv genannt, weil sie nach jedem Beschleunigungsvorgang nach gleichzeitiger Auswertung der Fahrzeugbeschleunigung bei Bedarf neu adaptiert wird.

## Patentansprüche

1. Drehzahlwandler mit
- einem drehbaren Wandlergehäuse (1),
- einem im Wandlergehäuse (1) befindlichen Abtriebszahnrad () mit angeschlossener Abtriebswelle(6),
- wenigstens einem mit dem Abtriebszahnrad (3) kämmenden Antriebszahnrad (4), das vom Wandlergehäuse (1) drehbar gelagert mitgenommen wird,
- einem das Antriebszahnrad (4) und das Abtriebszahnrad (3) aufnehmenden Strömungskanal (K) für ein Hydraulikmedium, und
- wenigstens einer im Strömungskanal (K) vorhandenen Drosseleinrichtung (7), **dadurch gekennzeichnet**, daß der Strömungskanal (K)
- als geschlossener Kanal ausgebildet ist,
- vollständig im Wandlergehäuse (1) angeordnet ist und
- sich in einer senkrecht zur Abtriebswelle (6) liegenden Ebene erstreckt.

2. Drehzahlwandler nach Anspruch 1, **dadurch gekennzeichnet**, daß mit dem Abtriebszahnrad (3) mehrere Antriebszahnräder (4) kämmen, die symmetrisch zur Abtriebswelle (6) liegen.

3. Drehzahlwandler nach Anspruch 2, **dadurch gekennzeichnet,** daß soviele Drosseleinrichtungen (7) wie Antriebszahnräder (4) vorhanden sind, wobei jeweils eine Drosseleinrichtung zwischen zwei Antriebszahnrädern liegt.

4. Drehzahlwandler nach Anspruch 1, 2 oder 3, **dadurch gekennzeichnet**, daß jede Drosseleinrichtung (7) so ausgebildet ist, daß sie das in ihrem Bereich vorhandene Hydraulikmedium nur verschiebt und nicht verdrängt.

5. Drehzahlwandler nach einem der Ansprüche 1 bis 4, **dadurch gekennzeichnet**, daß Abtriebszahnrad (3) und Antriebszahnräder (4) in ihren jeweiligen Zahnfußbereichen (F) in Richtung wenigstens einer Zahnradseite zur Zahnradachse hin geneigt sind und im Zahneingriffsbereich dieser Zahnräder vorhandene Wandlergehäusewände jeweils mit dem Strömungskanal verbundene Ausnehmungen (1a, 1a') aufweisen, die im Bereich der Verbindungslinie der Zahnräder voneinander getrennt sind.

6. Drehzahlwandler nach einem der Ansprüche 1 bis 5, **dadurch gekennzeichnet,** daß parallel zu jeder Drosseleinrichtung (7) zwei Steuerkanäle (20,21) vorhanden sind, die jeweils einen Differenzdruckkolben (26,30) aufweisen, die in entgegengesetzter Richtung wirken und aus einem ersten Kolbenbereich mit großem Durchmesser sowie aus einem zweiten Kolbenbereich mit kleinem Durchmesser bestehen, und daß Zylinderkammern (24,31) zur Aufnahme der ersten Kolbenbereiche an der dem zweiten Kolbenbereich zugewandten Seite über eine Ausgleichsleitung (33) mit Druckeinstelleinrichtung (32) untereinander verbunden sind.

7. Drehzahlwandler nach einem der Ansprüche 4 bis 6, **dadurch gekennzeichnet**, daß jede Drosseleinrichtung (7) aus einem zylindrischen Stellglied (7a) mit radialer Durchgangsöffnung (7b) besteht, dessen Zylinderachse parallel zur Abtriebswelle (6) liegt.

8. Drehzahlwandler nach Anspruch 7, **dadurch gekennzeichnet**, daß das Stellglied (7a) an einer Stirnseite mit einem querliegenden Stellhebel (8) verbunden ist, der an seinem einem Ende über ein Gestänge (9) mit einer Verschiebehülse (11) gekoppelt ist, die die Abtriebswelle (6) umgibt und vom Wandlergehäuse über einen Mitnehmer (13) mitgenommen wird, der eine axiale Verschiebung der Verschiebehülse (11) relativ zur Abtriebswelle (6) gestattet.

9. Drehzahlwandler nach Anspruch 8, **dadurch gekennzeichnet,** daß das andere Ende des Stellhebels (9) ein Ausgleichsgewicht (10) trägt.

10. Drehzahlwandler nach Anspruch 8 oder 9, **dadurch gekennzeichnet**, daß die Verschiebehülse (11) in einem Lagerring (18) mitnehmbar gelagert ist, welcher in Axialrichtung der Abtriebswelle (11) verschiebbar ist.

11. Drehzahlwandler nach einem der Ansprüche 1 bis 10, **dadurch gekennzeichnet**, daß der Strömungskanal (K) und die Ausnehmungen zur Aufnahme der Antriebszahnräder und des Abtriebszahnrads in einen einstückigen Wandlergehäusekörper eingebracht sind.

12. Drehzahlwandler nach Anspruch 11, **dadurch gekennzeichnet,** daß der Strömungskanal (K) zur Vergrößerung seiner Oberfläche gewunden ist.

13. Drehzahlwandler nach Anspruch 11 oder 12, **dadurch gekennzeichnet**, daß der Strömungskanal (K) bereichsweise in eine Anzahl paralleler Kanäle aufgeteilt ist.
